# EUROPEAN PATENT SPECIFICATION

(11) **EP 2 770 366 B1**
(45) Date of publication and mention of the grant of the patent: **20.05.2020**
(21) Application number: 12849270.9
(22) Date of filing: 06.11.2012
(51) Int. Cl.: G02F 1/1334, G02F 1/13357, A63F 5/04

(54) **BACKLIGHT UNIT, AND LIQUID CRYSTAL DISPLAY DEVICE AND GAME CONSOLE INCLUDING SAME**
HINTERGRUNDBELEUCHTUNGSEINHEIT SOWIE FLÜSSIGKRISTALLANZEIGEVORRICHTUNG UND SPIELKONSOLE DAMIT
UNITÉ DE RÉTROÉCLAIRAGE ET DISPOSITIF D'AFFICHAGE À CRISTAUX LIQUIDES ET CONSOLE DE JEU LA COMPRENANT

(30) Priority: 14.11.2011 KR 20110118139
(43) Date of publication of application: 27.08.2014
(73) Proprietor: Tovis Co., Ltd., Yeonsu-gu, Incheon 406-840 (KR)
(72) Inventor: KIM, Yong-Beom, Incheon 406-840 (KR)
(74) Representative: Manitz Finsterwald Patent- und Rechtsanwaltspartnerschaft mbB
(86) International application number: PCT/KR2012/009279
(87) International publication number: WO 2013/073790

(56) References cited:
- EP-A2- 2 296 033
- WO-A2-2011/052899
- CH-A5- 619 792
- JP-B2- 4 694 639
- KR-A- 20080 041 440
- KR-A- 20090 127 547
- KR-A- 20110 045 753
- KR-B1- 101 047 597
- US-A- 4 235 526
- US-A1- 2010 184 510

## Description

### [Technical Field]

The present invention relates to a backlight unit, and a liquid crystal display device and a game console including the same.

### [Background Art]

With increase of needs for various games, various gaming machines have been developed, and as an example, a slot machine which is used for casino game is one of gaming machines.

A gaming machine such a slot machine is provided with a plurality of reels on which symbols such as pictures or numbers are displayed, and takes a game rule that a game result is determined by combination of symbols displayed on the reels.

Recently, a liquid crystal display panel is used in a gaming machine having such a reel, and information for proceeding game or advertisement is displayed on the liquid crystal display panel.

A liquid crystal display panel is disposed in front of the reel, and in this case, symbols displayed on the reel which is disposed behind the liquid crystal display panel can be seen from the front of the liquid crystal display panel. For this function, several methods have been suggested. For example, in Korea Patent Publication No. 10-2007-0055766 (title: gaming machine having display screen), a light guide plate of a backlight unit of a liquid crystal display is made of transparent or translucent material and scratch or dot pattern is not formed on area of the light guide plate corresponding to symbol display area of the reel so that symbols of the reel can be seen from the front of the liquid crystal display through the area where the pattern is not formed, and in Korea Patent Publication No. 10-2006-0049328 (title: gaming machine), area of a diffuse sheet, a light guide plate, and a reflector of a backlight unit corresponding to symbol display area of the reel is removed and thus symbols of the reel can be seen from the front of the liquid crystal display.

However, a method suggested in Korea Patent Publication No. 10-2007-0055766 has a problem in that the area of the light guide plate on which scratch or dot pattern is not formed may deteriorate the function of uniform light penetration of the light guide plate so as to deteriorate light efficiency of the backlight unit. And, a method suggested in Korea Patent Publication No. 10-2006-0049328 has a problem in that images cannot be displayed on openings existed in the diffuse sheet, a light guide plate and a reflector and images cannot be displayed on the openings when game using the reel is not performed.

A backlight unit according to the preamble of claim 1 is disclosed in EP 2 296 033 A2. Further prior art is known from WO 2011/052899 A2.

### [Detailed Description of the Invention]

### [Technical Problem]

It is an object of the invention to solve the above-mentioned problems and to provide a backlight unit for a liquid crystal display device in which a predetermined area can be converted to a transparent state and a liquid crystal display device and a gaming machine including the same.

### [Technical Solution]

The object is satisfied by a backlight unit according to claim 1. Embodiments of the invention can be taken from the dependent claims, the description and the drawings.

A light scattering pattern may not be formed on a portion of the light guiding panel which is overlapped with the polymer dispersed liquid crystal layer in a forward/ rearward direction and a light scattering pattern may be formed on the remaining portion thereof.

The polymer dispersed liquid crystal layer may have a size of overlapping with an entire surface of the light guiding panel, and the light guiding panel is not provided with a light scattering pattern.

The polymer dispersed liquid crystal layer may include: a pair of transparent electrodes which are disposed to face one another; and a plurality of polymer dispersed liquid crystal cells which are disposed between the pair of the transparent electrodes and are formed with a polymer dispersed liquid crystal. The plurality of the polymer dispersed liquid crystal cells are arranged to form the predetermined pattern.

A space between the plurality of the polymer dispersed liquid crystal cells may be filled with a transparent polymer resin.

A liquid crystal display device according to the present invention includes: the backlight unit of the invention; and a liquid crystal panel which is disposed in front of the backlight unit.

A game console according to the present invention includes: a liquid crystal display device of the invention; and at least one reel which is disposed behind the backlight unit and where a plurality of symbols are displayed.

### [Advantages Effects]

According to the present invention, since a polymer dispersed liquid crystal layer with a predetermined pattern is disposed behind a light guiding panel, a reel which is disposed therebehind can be seen in case that the polymer dispersed liquid crystal layer is turned to be transparent, and since the polymer dispersed liquid crystal layer has a predetermined pattern, it may increase the scattering of light emitted from a light source so that light can progress toward the front more uniformly.

### [Brief Descriptions of Drawings]

FIG. 1 is a perspective view of a game console according to an example not covered by the invention.
FIG. 2 is an exploded perspective view of a liquid crystal display device and a reel of a game console according to an example not covered by the invention.
FIG. 3 is a sectional view taken along a line III-III in FIG. 2.
FIG. 4 is a drawing for explaining relation of position of a backlight unit of a liquid crystal display device and a symbol selection area of a game console according to an example not covered by the invention.
FIG. 5 is a sectional view of a liquid crystal display device and a reel according to another example not covered by the invention.
FIG. 6 is a sectional view of a game console according to an embodiment of the present invention.

### [Detailed Description of the Embodiments]

In the drawings, the thickness of layers, films, panels, regions, etc. are exaggerated for clarity. Like reference numerals designate like elements throughout the specification. It will be understood that when an element such as a layer, film, region or substrate is referred to as being "on" another element, it can be directly on the other element or intervening elements may also be present. In contrast, when an element is referred to as being "directly on" another element, there are no intervening elements present.

Since a backlight unit according to an embodiment of the present invention and a liquid crystal display device including a backlight unit according to an embodiment of the present invention are included in a game console according to an embodiment of the present invention, separate descriptions for a backlight unit according to an embodiment of the present invention and a liquid crystal display device including a backlight unit according to an embodiment of the present invention are omitted.

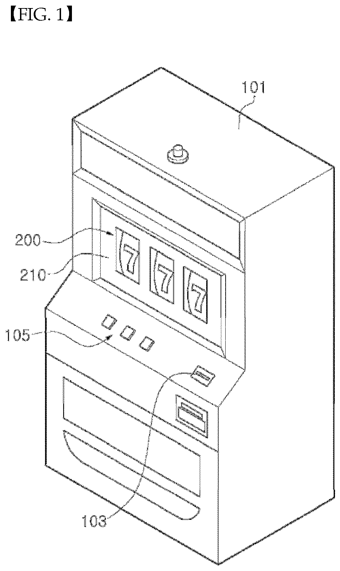

Referring to FIG. 1, a game console is provided with a body 101 of a cabinet shape, and various parts and controllers for performing game may be housed in body 101.

Various parts which are necessary for performing game, e.g., an insert hole 103 for insertion of coin, various input buttons 105 or the like, may be provided or formed to body 101.

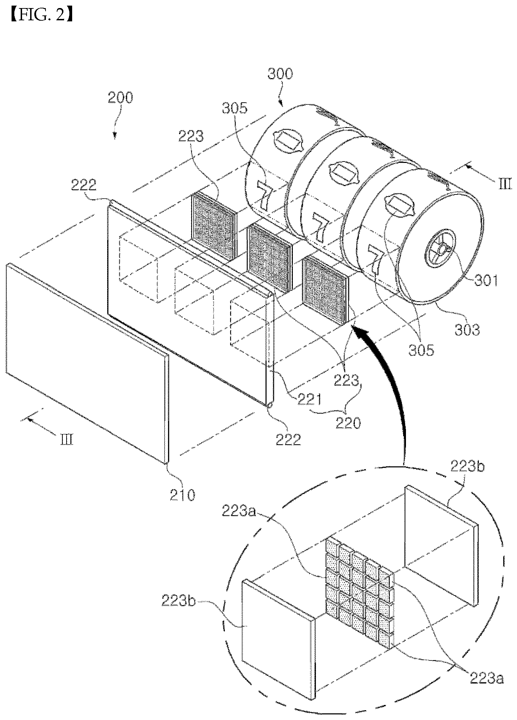

As shown in FIG. 2 to FIG. 4, a gaming machine includes a liquid crystal display device 200 which is a display device for displaying images, and a reel 300 which is disposed behind the liquid crystal display device 200.

The reel 300 is housed within the body 101 of a gaming machine so as to be disposed behind the liquid crystal display device 200. The reel 300 may be provided as a plural, and the respective reel 300 may be disposed adjacently in parallel. The respective reel 300 may be formed to rotate independently.

For example, the reel 300 may include a reel drum 301 and a reel strip 303 which is attached to an outer surface of the reel drum 301. And a motor (not shown) for rotating the reel drum 301 may be provided.

For example, the reel strip 303 may be made of translucent resin.

A plurality of symbols 305 may be displayed on an outer surface of the reel strip 303, and the respective symbol 305 may be equidistantly disposed with some interval therebetween. At this time, the symbol may be a number, a picture, a letter, etc. Hereinafter, an area of the reel strip 303 where the symbol 305 is displayed is referred to as a symbol display area. That is, the respective reel 300 has symbol display area of the same number with the number of the symbols 305 displayed on an outer surface thereof.

The respective reel 300 may rotate and stop at a state that the symbol display area where the symbol 305 is displayed is positioned at a front center. Hereinafter, an imaginary area corresponding to a front center at which the symbol display area where the symbol 305 is displayed stops is referred to as the symbol selection area.

The liquid crystal display device 200 includes a liquid crystal display panel 210 and a backlight unit 220.

The liquid crystal display device 200, as shown in FIG. 1, is installed to the body 101 of a game console such that a front surface of the liquid crystal panel 210 is exposed to outside. Accordingly, the liquid crystal display device 200 may role as an image display of a game console and can display various images such as information or images for performing game and advertisements.

The liquid crystal display device 200 operates to display desired images on the whole image display area of the liquid crystal panel 210 or to convert a predetermined area among the whole image display area to be transparent or translucent. At this time, "transparent or translucent" means that an object or image behind the same can be seen from the front, and "transparent or translucent" is simply written as "transparent".

The predetermined area is an area corresponding to a symbol selection area where the selected symbol of reel 300 disposed behind the liquid crystal display device 200 is disposed, and in case that the predetermined area is turned to be transparent, a symbol (e.g., a figure, a number, a picture or the like) displayed in the symbol selection area of the reel 300 disposed behind the liquid crystal display device 200 can be seen from the front of the liquid crystal display device 200.

In case that the liquid crystal display device 200 operates such that the predetermined area becomes transparent, a symbol displayed on the reel 300 can be seen from the front of a game console through the predetermined area, so a game using the symbol displayed on the reel 300 can be performed. At this time, the liquid crystal display device 200 operates such that a symbol of the reel 300 can be seen through the predetermined area, and at the same time, may display other information or images necessary for a game or other information or images on an image display area other than the predetermined area.

On the other hand, in case that the liquid crystal display device 200 operates such that the predetermined area is not transparent, the liquid may operate as a normal display device.

A backlight unit, and a liquid crystal display for realizing this function and a gaming machine including the same will be described in detail hereinafter.

Referring to FIG. 2 to FIG. 4, the liquid crystal display device 200 includes the liquid crystal panel 210 and the backlight unit 220 which are disposed back and forth in a line.

The liquid crystal panel 210 may be a conventional transparent liquid crystal panel, and for example, may be formed by sealing liquid crystal in a space formed between two facing transparent panels such as a glass panel on which thin film transistors are formed. At this time, a default display mode of the liquid crystal panel 210 may be set as a normally white. "Normally white" means that a white display state (light can penetrate toward a display surface, i.e., light penetrating through a display surface can be from the outside) is realized while a liquid crystal panel is not operated.

The backlight unit 220 acts as a light source of the liquid crystal display device 200 and is disposed behind the liquid crystal panel 210.

Meanwhile, not shown in the drawing, the liquid crystal display device 200 may further include a chassis including various frames and holders for assembling the liquid crystal panel 210 and the backlight unit 220. In addition, the liquid crystal display device 200 may further include well known various parts such as a driving circuit for driving the liquid crystal panel 210, etc. Gap between the liquid crystal panel 210 and the backlight unit 220 is enlarged for ease of description, but both may contact each other and may be disposed with a small gap.

The back light unit 220 includes a light guiding panel 221, a light source 222 and a polymer dispersed liquid crystal layer 223.

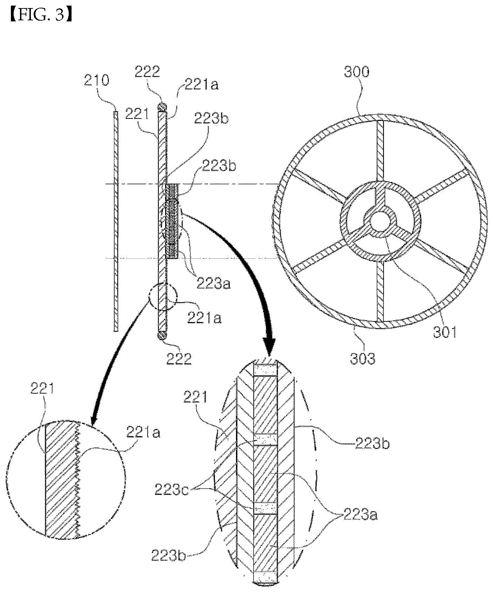

The light source 222 may be disposed in the vicinity of the light guiding panel 221 and emits light. For example, as shown in FIG. 2 and FIG. 3, the light source 222 may be disposed to contact an upper end and a lower end of the light guiding panel 221, and the light source 222 may be realized as an arbitrary device which can emit light such as a cathode ray lamp or an LED lamp.

The light guiding panel 221 may be realized as a light guiding panel of a conventional liquid crystal display device. At this time, light scattering patter which is generally formed on a conventional light guiding panel may not be formed on at least partial portion of a surface of the light guiding panel 221, and this will be explained later in more detail. Here, the light scattering pattern may mean an arbitrary pattern for scattering light such as dots, scratches, or the like.

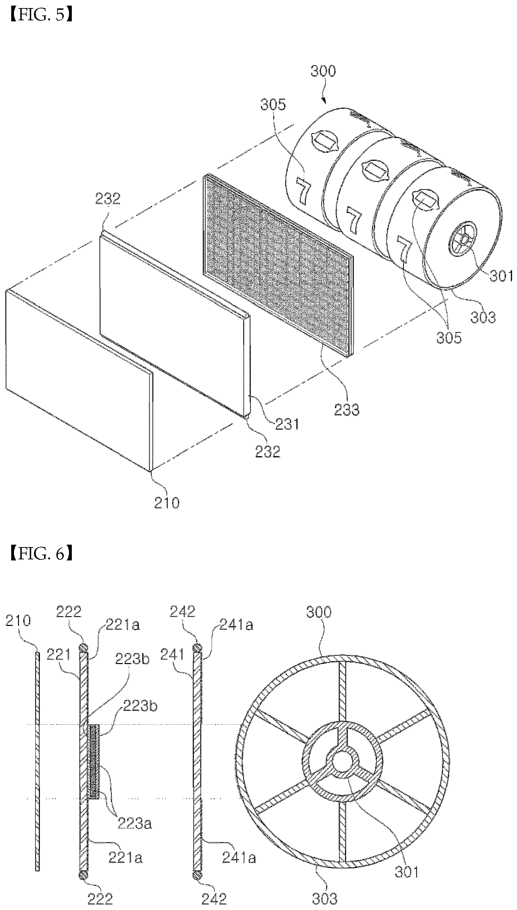

The polymer dispersed liquid crystal layer 223 is disposed behind the light guiding panel 221 and is arranged to be at least partially overlapped with the light guiding panel 221 in a forward/rearward direction. That is, as shown in FIG. 2 and FIG. 3, the polymer dispersed liquid crystal display layer 223 may be arranged to be overlapped with a partial area (i.e., an area corresponding to the symbol selection area of the reel) among the whole area of the light guiding panel 221. Meanwhile, as shown in FIG. 5, the polymer dispersed liquid crystal layer 233 may be formed to be overlapped with the whole area of the light guiding panel 221. Here, being overlapped with a forward/rearward direction means that they are to be seen in an overlapped state when it is seen from the front.

At this time, although the polymer dispersed liquid crystal layer 223 is shown to contact the rear side of the light guiding panel 221 in FIG. 3, the polymer dispersed liquid crystal layer 223 may be disposed to be apart from the rear side of the light guiding panel 221 by a small gap.

The polymer dispersed liquid crystal layer 223 is formed to be selectively converted to be transparent or non-transparent depending on whether an electricity is applied thereto or not, and the polymer dispersed liquid crystal layer 223 may be formed using a polymer dispersed liquid crystal (PDLC). The polymer dispersed liquid crystal is one of a liquid crystal cells which can be used to a liquid crystal display device, and controls the transmission of light according to light scattering intensity. There are some types of PDLC, for example, it may be formed by scattering liquid crystal particles of several µminto polymer, or by containing liquid crystal into net type polymer. Alignment of liquid crystal of PDLC becomes irregular when voltage is not applied thereto and light scattering occurs on a surface having different refractive index from medium, and on the other hand, if voltage is applied to PDLC, directions of liquid crystal molecules becomes uniform so that light can penetrate therethrough. The polymer dispersed liquid crystal layer 223 may be turned to be transparent or non-transparent depending on whether an electricity is applied thereto or not.

For example, referring to FIG. 2 and FIG. 3, the polymer dispersed liquid crystal layer 223 may be formed by disposing transparent electrodes 223b on both sides of a polymer dispersed liquid crystal cell 223a which is formed by a polymer dispersed liquid crystal.

The transparent electrodes 223b are members for applying electricity to the polymer dispersed liquid crystal cell 223a disposed therebetween, and may be formed of any material which is transparent and has electrical conductivity. For example, the transparent electrodes 223b may be formed Indium Tin Oxide (ITO) which is generally used to form a transparent electrode of a liquid crystal display panel.

At this time, as shown in FIG. 2 and FIG. 3, the polymer dispersed liquid crystal layer 223 is separately formed to have a predetermined pattern. For example, the polymer dispersed liquid crystal layer 223 may be formed to have a predetermined pattern by being formed such that the polymer dispersed liquid crystal cells 223a partially exist rather than that the polymer dispersed liquid crystal cells 223a which is formed by the polymer dispersed liquid crystal exist on the whole region thereof. In detail, as shown in FIG. 2 and FIG. 3, a plurality of polymer dispersed liquid crystal cells 223a having a rectangular shape respectively are repeatedly arranged to be apart from one another, so that the polymer dispersed liquid crystal layer 223 may be formed to have a predetermined pattern. Here, although it is shown that the respective polymer dispersed liquid crystal cells 223a have a rectangular shape, it is not restricted thereto and can be varied to various shapes such as a circle, a rhombus or the like.

Although the number of the polymer dispersed liquid crystal layers 223 are three which is the same with the number of the symbol selection areas of the reel 300 in FIG. 2 and FIG. 3, it can be varied according to the number of the symbol selection area. Further, the three polymer dispersed liquid crystal layers 223 may be connected to one another so as to form one body. That is, the transparent electrode 223b is not divided into three but is provided as one member which covers the symbol selection areas of the reel 300, and the polymer dispersed liquid crystal cells may be disposed thereon.

Since the polymer dispersed liquid crystal layer 223 is formed to have a predetermined pattern, light scattering is promoted by the pattern of the polymer dispersed liquid crystal layer 223 even when a light scattering pattern is not provided to a corresponding area of the light guiding panel 221, so that light emitted from the light source 222 is scattered by the polymer dispersed liquid crystal layer 223 having a pattern and then uniformed progresses forward through the light guiding panel 221, so that light characteristics can be enhanced.

The polymer dispersed liquid may be formed by various methods, and for example it may be formed by forming one transparent electrode 223b and then forming the polymer dispersed liquid crystal cells 223a in a predetermined pattern thereon and then forming the other transparent electrode 223b thereon, and at this time, a space between the polymer dispersed liquid crystal cells 223a can be filled with transparent polymer resin 223c, so that a structural intensity of the polymer dispersed liquid crystal layer 223 can be increased without deteriorating light characteristic. Meanwhile, as another method for forming the polymer dispersed liquid crystal layer 223, after forming one transparent electrode 223b and then forming the transparent polymer resin 223c with a pattern in a state that spaces for the polymer dispersed liquid crystal cells 223a are remained in an empty state and then filling the remained empty spaces with the polymer dispersed liquid crystal to form the polymer dispersed liquid crystal cells 223a and then forming the other transparent electrode 223b thereon.

At this time, the light scattering pattern may not be formed on a portion which is overlapped with the polymer dispersed liquid crystal layer 223 in a forward/rearward direction among the surface of the light guiding panel 221. That is, as shown in FIG. 2 and FIG. 3, a light scattering pattern 221a is formed on a portion which is not overlapped with the polymer dispersed liquid crystal layer 223 in a forward/rearward direction among the surface of the light guiding panel 221 and is not formed on a portion which is overlapped with the polymer dispersed liquid crystal layer 223 in a forward/ rearward direction. The reason of this is that in case that a portion where the polymer dispersed liquid crystal layer 223 is formed becomes to be transparent, the symbol selection area of the reel 300 disposed therebehind can be seen from the front, and in order to obtain this the light scatting pattern 221a is not formed at a portion which is overlapped with the polymer dispersed liquid crystal layer 223 corresponding to the symbol selection area among the surface of the light guiding panel 221. At this time, the light scattering pattern 221a is formed on the other portion which is not overlapped with the polymer dispersed liquid crystal layer 223, so the rear sides cannot be seen from the front and the light scattering is promoted so that light emitted from the light source 222 can progress toward the liquid crystal display panel 210 via the whole surface of the light guiding panel 221.

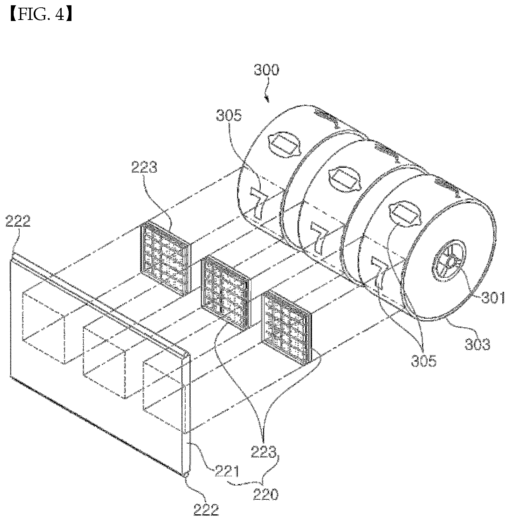

By the above-described configuration, referring to FIG. 4, in case that an electricity is applied to the pair of the transparent electrodes 223b of the polymer dispersed liquid crystal layer 223 so that the polymer dispersed liquid crystal cells 223a become transparent, the polymer dispersed liquid crystal layer 223 becomes transparent and accordingly the reel 300 can be seen from the front through the transparent polymer dispersed liquid crystal layer 223 and a portion of the light guiding panel 221 where the light scattering pattern is not formed, so a game using the reel 300 can be performed. On the other hand, in case that an electricity is not applied to the pair of the transparent electrodes 223b of the polymer dispersed liquid crystal layer 223 so that the polymer dispersed liquid crystal cells 223a become non-transparent, the non-transparent polymer dispersed liquid crystal cells 223a hide the reel 300, so the reel 300 is only partially seen from the front and accordingly without performing a game using the reel 300 images can be displayed on the liquid crystal display device.

Referring to FIG. 5, the polymer dispersed liquid crystal layer 233 has a size of overlapping with the entire surface of the light guiding panel 231. At this time, a light scattering pattern is not formed on the light guiding panel 231. Accordingly, although a light scattering pattern is not formed on the light guiding panel 231, since the polymer dispersed liquid crystal layer 233 with a predetermined pattern causes light scattering on the entire surface of the light guiding panel 231, scattering of light emitted from the light source 232 is promoted so that light can progress toward the front through the entire surface of the light guiding panel uniformly.

An embodiment of the present invention will be explained with reference to FIG. 6.

Referring to FIG. 6, a rear light guiding panel 241 which is disposed behind the polymer dispersed liquid crystal layer 223 is further provided. A light source 242 is provided in the vicinity of the rear light guiding panel 241. In addition, a light scattering pattern is not formed on a portion of the rear light guiding panel 241 which is overlapped with the polymer dispersed liquid crystal layer 223, and a light scattering pattern 241a is formed only on the other portion thereof. At this time, the polymer dispersed liquid crystal layer 223 contacts the rear surface of the light guiding panel 221, and the rear light guiding panel 241 is spaced from the polymer dispersed liquid crystal layer 223.

According to this embodiment, in case that the liquid crystal panel 210 acts as an original display device without performing a game using the reel 300, the light source 222 for the front light guiding panel 221 is turned on and the polymer dispersed liquid crystal layer 223 is not supplied with electricity so as to be non-transparent. Meanwhile, in case that a game using the reel 300 is performed, the polymer dispersed liquid crystal layer 223 is supplied with electricity so as to be transparent such that the symbol on the reel 300 can be seen, and the light source 222 of the front light guiding panel 221 is not turned on and the light source 242 is turned on.

In case that the rear light guiding panel 241 is not provided and the polymer dispersed liquid crystal layer 223 contacts the front light guiding panel 221, light emitted from the light guiding panel 221 can be partially scattered by the polymer dispersed liquid crystal layer 223 even when the polymer dispersed liquid crystal layer 223 is supplied with electricity so as to be transparent, so dazzling may occur at the front. In order to solve this problem, in the present embodiment, since the rear light guiding panel 241 is disposed to be apart from the polymer dispersed liquid crystal layer 223 and the light source 222 for the front light guiding panel 221 is not turned on and the light source 242 for the rear light guiding panel 241 is turned on, due to the existence of air gap between the rear light guiding panel 241 and the polymer dispersed liquid crystal layer 223, scattering of light emitted from the rear light guiding panel 241 by the polymer dispersed liquid crystal layer 223 can be substantially reduced so that dazzling phenomenon can be prevented.

### [industrial Applicability]

The present invention relates to a backlight unit and a display device including the same and can be applied to various displays, so the present invention has an industrial applicability.

## Claims

1. A backlight unit (220) comprising:
a front light guiding panel (221);
a light source (222) which is disposed in the vicinity of the front light guiding panel (221);
a polymer dispersed liquid crystal layer (223) which is disposed behind the front light guiding panel (221) and is formed to be selectively converted to be transparent or non-transparent depending on whether an electricity is applied thereto or not; and
a rear light guiding panel (241) which is disposed behind the polymer dispersed liquid crystal layer (223),
wherein the polymer dispersed liquid crystal layer (223) is at least partially overlapped with the front light guiding panel (221) in a forward/rearward direction and is separately formed to have a predetermined pattern, and
wherein the polymer dispersed liquid crystal layer (223) contacts a rear surface of the front light guiding panel (221),
**characterized in that**
the rear light guiding panel (241) is spaced from the polymer dispersed liquid crystal layer (223), and a light scattering pattern is not formed on a portion of the rear light guiding panel (241) which is overlapped with the polymer dispersed liquid crystal layer (223) in a forward/rearward direction, and a light scattering portion (241a) is formed only on the other portion thereof.

2. The backlight unit (220) of claim 1, wherein a light scattering pattern (221a) is not formed on a portion of the front light guiding panel (221) which is overlapped with the polymer dispersed liquid crystal layer (223) in a forward/rearward direction and a light scattering pattern (221a) is formed on the remaining portion thereof.

3. The backlight unit (220) of claim 1, wherein the polymer dispersed liquid crystal layer (223) comprises:
a pair of transparent electrodes (223b) which are disposed to face one another; and
a plurality of polymer dispersed liquid crystal cells (223a) which are disposed between the pair of the transparent electrodes (223b) and are formed with a polymer dispersed liquid crystal,
wherein the plurality of the polymer dispersed liquid crystal cells (223a) are arranged to form the predetermined pattern, wherein, preferably, a space between the plurality of the polymer dispersed liquid crystal cells (223a) is filled with a transparent polymer resin (223c).

4. A liquid crystal display device (200) comprising:
a backlight unit (220) according to claim 1; and
a liquid crystal panel (210) which is disposed in front of the backlight unit (220).

5. The liquid crystal display device (200) of claim 4, wherein a light scattering pattern (221a) is not formed on a portion of the front light guiding panel (221) which is overlapped with the polymer dispersed liquid crystal layer (223) in a forward/rearward direction and a light scattering pattern (221a) is formed on the remaining portion thereof.

6. The liquid crystal display device (200) of claim 4, wherein the polymer dispersed liquid crystal layer (223) comprises:
a pair of transparent electrodes (223b) which are disposed to face one another; and
a plurality of polymer dispersed liquid crystal cells (223a) which are disposed between the pair of the transparent electrodes (223b) and are formed with a polymer dispersed liquid crystal,
wherein the plurality of the polymer dispersed liquid crystal cells (223a) are arranged to form the predetermined pattern, wherein, preferably, a space between the plurality of the polymer dispersed liquid crystal cells (223a) is filled with a transparent polymer resin (223c).

7. A game console comprising:
a liquid crystal display device (200) according to claim 4; and
at least one reel (300) which is disposed behind the backlight unit (210) and where a plurality of symbols (305) are displayed.

8. The game console of claim 7, wherein a light scattering pattern (221a) is not formed on a portion of the light guiding panel (210) which is overlapped with the polymer dispersed liquid crystal layer (223) in a forward/rearward direction and a light scattering pattern (221a) is formed on the remaining portion thereof.

9. The game console of claim 7, wherein the polymer dispersed liquid crystal layer (223) comprises:
a pair of transparent electrodes (223b) which are disposed to face one another; and
a plurality of polymer dispersed liquid crystal cells (223a) which are disposed between the pair of the transparent electrodes (223b) and are formed with a polymer dispersed liquid crystal,
wherein the plurality of the polymer dispersed liquid crystal cells (223a) are arranged to form the predetermined pattern, wherein, preferably, a space between the plurality of the polymer dispersed liquid crystal cells (223a) is filled with a transparent polymer resin (223c).

## Patentansprüche

1. Hintergrundbeleuchtungseinheit (220), umfassend:
eine vordere Lichtleitplatte (221);
eine Lichtquelle (222), die in der Nähe der vorderen Lichtleitplatte (221) angeordnet ist;
eine Polymerdispersions-Flüssigkristallschicht (223), die hinter der vorderen Lichtleitplatte (221) angeordnet ist und so ausgebildet ist, dass sie selektiv umgewandelt wird, um transparent oder nicht transparent zu sein, je nachdem, ob ein Strom daran angelegt wird oder nicht; und
eine hintere Lichtleitplatte (241), die hinter der Polymerdispersions-Flüssigkristallschicht (223) angeordnet ist,
wobei die Polymerdispersions-Flüssigkristallschicht (223) zumindest teilweise mit der vorderen Lichtleitplatte (221) in einer Vorwärts-/Rückwärtsrichtung überlappt und so getrennt gebildet ist, dass ein vorbestimmtes Muster vorliegt, und
wobei die Polymerdispersions-Flüssigkristallschicht (223) eine Rückfläche der vorderen Lichtleitplatte (221) berührt,
**dadurch gekennzeichnet, dass**
die hintere Lichtleitplatte (241) von der Polymerdispersions-Flüssigkristallschicht (223) beabstandet ist, und ein Lichtstreuungsmuster nicht auf einem Abschnitt der hinteren Lichtleitplatte (241), der mit der Polymerdispersions-Flüssigkristallschicht (223) in einer Vorwärts-/Rückwärtsrichtung überlappt ist, gebildet ist, und ein Lichtstreuungsabschnitt (241a) nur auf dem anderen Abschnitt davon gebildet ist.

2. Hintergrundbeleuchtungseinheit (220) nach Anspruch 1, wobei ein Lichtstreuungsmuster (221a) nicht auf einem Abschnitt der vorderen Lichtleitplatte (221), der mit der Polymerdispersions-Flüssigkristallschicht (223) in einer Vorwärts-/Rückwärtsrichtung überlappt ist, gebildet ist, und ein Lichtstreuungsmuster (221a) auf dem verbleibenden Abschnitt davon gebildet ist.

3. Hintergrundbeleuchtungseinheit (220) nach Anspruch 1, wobei die Polymerdispersions-Flüssigkristallschicht (223) umfasst:
ein Paar transparenter Elektroden (223b), die einander gegenüberliegend angeordnet sind; und
eine Vielzahl von Polymerdispersions-Flüssigkristallzellen (223a), die zwischen dem Paar der transparenten Elektroden (223b) angeordnet und mit einem Polymerdispersions-Flüssigkristall gebildet sind,
wobei die Vielzahl der Polymerdispersions-Flüssigkristallzellen (223a) so angeordnet sind, dass sie das vorbestimmte Muster bilden, wobei vorzugsweise ein Raum zwischen der Vielzahl der Polymerdispersions-Flüssigkristallzellen (223a) mit einem transparenten Polymerharz (223c) gefüllt ist.

4. Flüssigkristall-Anzeigevorrichtung (200), umfassend:
eine Hintergrundbeleuchtungseinheit (220) nach Anspruch 1; und
ein Flüssigkristallpanel (210), das vor der Hintergrundbeleuchtungseinheit (220) angeordnet ist.

5. Flüssigkristall-Anzeigevorrichtung (200) nach Anspruch 4, wobei ein Lichtstreuungsmuster (221a) nicht auf einem Abschnitt der vorderen Lichtleitplatte (221), der mit der Polymerdispersions-Flüssigkristallschicht (223) in einer Vorwärts-/Rückwärtsrichtung überlappt ist, gebildet ist, und ein Lichtstreuungsmuster (221a) auf dem übrigen Abschnitt davon gebildet ist.

6. Flüssigkristall-Anzeigevorrichtung (200) nach Anspruch 4, wobei die Polymerdispersions-Flüssigkristallschicht (223) umfasst:
ein Paar transparenter Elektroden (223b), die einander gegenüberliegend angeordnet sind; und
eine Vielzahl von Polymerdispersions-Flüssigkristallzellen (223a), die zwischen dem Paar der transparenten Elektroden (223b) angeordnet und mit einem Polymerdispersions-Flüssigkristall gebildet sind,
wobei die Vielzahl der Polymerdispersions-Flüssigkristallzellen (223a) so angeordnet sind, dass sie das vorbestimmte Muster bilden, wobei vorzugsweise ein Raum zwischen der Vielzahl der Polymerdispersions-Flüssigkristallzellen (223a) mit einem transparenten Polymerharz (223c) gefüllt ist.

7. Spielkonsole, umfassend:
eine Flüssigkristall-Anzeigevorrichtung (200) nach Anspruch 4; und
mindestens eine Walze (300), die hinter der Hintergrundbeleuchtungseinheit (210) angeordnet ist und auf der eine Vielzahl von Symbolen (305) angezeigt wird.

8. Spielkonsole nach Anspruch 7, wobei ein Lichtstreuungsmuster (221a) nicht auf einem Abschnitt der Lichtleitplatte (210), der mit der Polymerdispersions-Flüssigkristallschicht (223) in einer Vorwärts-/Rückwärtsrichtung überlappt ist, gebildet ist, und ein Lichtstreuungsmuster (221a) auf dem übrigen Abschnitt davon gebildet ist.

9. Spielkonsole nach Anspruch 7, wobei die Polymerdispersions-Flüssigkristallschicht (223) umfasst:
ein Paar transparenter Elektroden (223b), die einander gegenüberliegend angeordnet sind; und
eine Vielzahl von Polymerdispersions-Flüssigkristallzellen (223a), die zwischen dem Paar der transparenten Elektroden (223b) angeordnet und mit einem Polymerdispersions-Flüssigkristall gebildet sind,
wobei die Vielzahl der Polymerdispersions-Flüssigkristallzellen (223a) so angeordnet sind, dass sie das vorbestimmte Muster bilden, wobei vorzugsweise ein Raum zwischen der Vielzahl der Polymerdispersions-Flüssigkristallzellen (223a) mit einem transparenten Polymerharz (223c) gefüllt ist.

## Revendications

1. Unité de rétro-éclairage (220) comprenant :
un panneau avant de guidage de lumière (221) ;
une source de lumière (222) qui est disposée au voisinage du panneau avant de guidage de lumière (221) ;
une couche de cristaux liquides dispersés dans un polymère (223) qui est disposée derrière le panneau avant de guidage de lumière (221) et qui est formée pour être sélectivement convertie de manière à être transparente ou non transparente selon qu'une électricité lui est appliquée ou non ; et
un panneau arrière de guidage de lumière (241) qui est disposé derrière la couche de cristaux liquides dispersés dans un polymère (223),
dans laquelle la couche de cristaux liquides dispersés dans un polymère (223) est au moins partiellement chevauchée par le panneau avant de guidage de lumière (221) dans une direction avant/arrière et est formée séparément de manière à avoir un motif prédéterminé, et
dans laquelle la couche de cristaux liquides dispersés dans un polymère (223) est en contact avec une surface arrière du panneau avant de guidage de lumière (221),
**caractérisée en ce que**
le panneau arrière de guidage de lumière (241) est espacé de la couche de cristaux liquides dispersés dans un polymère (223), un motif de diffusion de lumière n'est pas formé sur une partie du panneau arrière de guidage de lumière (241) qui est chevauchée par la couche de cristaux liquides dispersés dans un polymère (223) dans une direction avant/arrière et une partie de diffusion de lumière (241a) est formée seulement sur l'autre partie de celui-ci.

2. Unité de rétro-éclairage (220) selon la revendication 1, dans laquelle un motif de diffusion de lumière (221a) n'est pas formé sur une partie du panneau avant de guidage de lumière (221) qui est chevauchée par la couche de cristaux liquides dispersés dans un polymère (223) dans une direction avant/arrière et un motif de diffusion de lumière (221a) est formé sur la partie restante de celui-ci.

3. Unité de rétro-éclairage (220) selon la revendication 1, dans laquelle la couche de cristaux liquides dispersés dans un polymère (223) comprend :
une paire d'électrodes transparentes (223b) qui sont disposées de manière à se faire face ; et
une pluralité de cellules à cristal liquide dispersé dans un polymère (223a) qui sont disposées entre la paire d'électrodes transparentes (223b) et sont formées avec un cristal liquide dispersé dans un polymère,
dans laquelle la pluralité de cellules à cristal liquide dispersé dans un polymère (223a) sont agencées de manière à former le motif prédéterminé, dans laquelle, de préférence, un espace entre la pluralité de cellules à cristal liquide dispersé dans un polymère (223a) est rempli avec une résine polymère transparente (223c).

4. Dispositif d'affichage à cristaux liquides (200) comprenant :
une unité de rétro-éclairage (220) selon la revendication 1 ; et
un panneau à cristaux liquides (210) qui est disposé devant l'unité de rétro-éclairage (220).

5. Dispositif d'affichage à cristaux liquides (200) selon la revendication 4, dans lequel un motif de diffusion de lumière (221a) n'est pas formé sur une partie du panneau avant de guidage de lumière (221) qui est chevauchée par la couche de cristaux liquides dispersés dans un polymère (223) dans une direction avant/arrière et un motif de diffusion de lumière (221a) est formé sur la partie restante de celui-ci.

6. Dispositif d'affichage à cristaux liquides (200) selon la revendication 4, dans lequel la couche de cristaux liquides dispersés dans un polymère (223) comprend :
une paire d'électrodes transparentes (223b) qui sont disposées de manière à se faire face ; et
une pluralité de cellules à cristal liquide dispersé dans un polymère (223a) qui sont disposées entre la paire d'électrodes transparentes (223b) et sont formées avec un cristal liquide dispersé dans un polymère,
dans lequel la pluralité de cellules à cristal liquide dispersé dans un polymère (223a) sont agencées de manière à former le motif prédéterminé, dans lequel, de préférence, un espace entre la pluralité de cellules à cristal liquide dispersé dans un polymère (223a) est rempli avec une résine polymère transparente (223c).

7. Console de jeu comprenant :
un dispositif d'affichage à cristaux liquides (200) selon la revendication 4 ; et
au moins un rouleau (300) qui est disposé derrière l'unité de rétro-éclairage (210) et sur lequel une pluralité de symboles (305) sont affichés.

8. Console de jeu selon la revendication 7, dans laquelle un motif de diffusion de lumière (221a) n'est pas formé sur une partie du panneau de guidage de lumière (210) qui est chevauchée par la couche de cristaux liquides dispersés dans un polymère (223) dans une direction avant/arrière et un motif de diffusion de lumière (221a) est formé sur la partie restante de celui-ci.

9. Console de jeu selon la revendication 7, dans laquelle la couche de cristaux liquides dispersés dans un polymère (223) comprend :
une paire d'électrodes transparentes (223b) qui sont disposées de manière à se faire face ; et
une pluralité de cellules à cristal liquide dispersé dans un polymère (223a) qui sont disposées entre la paire d'électrodes transparentes (223b) et sont formées avec un cristal liquide dispersé dans un polymère,
dans lequel la pluralité de cellules à cristal liquide dispersé dans un polymère (223a) sont agencées de manière à former le motif prédéterminé, dans lequel, de préférence, un espace entre la pluralité de cellules à cristal liquide dispersé dans un polymère (223a) est rempli avec une résine polymère transparente (223c).
